(19) Europäisches Patentamt
European Patent Office
Office européen des brevets

(11) **EP 4 364 630 B1**

(12) **EUROPÄISCHE PATENTSCHRIFT**

(45) Veröffentlichungstag und Bekanntmachung des Hinweises auf die Patenterteilung:
**08.10.2025 Patentblatt 2025/41**

(21) Anmeldenummer: **23205604.4**

(22) Anmeldetag: **24.10.2023**

(51) Internationale Patentklassifikation (IPC):
*G05D 105/10* (2024.01)   *G05D 107/40* (2024.01)
*G05D 109/10* (2024.01)

(52) Gemeinsame Patentklassifikation (CPC):
**A47L 11/4011; A47L 11/4061; G05D 1/648;**
A47L 2201/04; G05D 2105/10; G05D 2107/40;
G05D 2109/10

(54) **VERFAHREN ZUM BETRIEB EINES MOBILEN, SELBSTFAHRENDEN GERÄTS**

METHOD FOR OPERATING A MOBILE SELF-PROPELLED DEVICE

PROCÉDÉ DE FONCTIONNEMENT D'UN ENGIN MOBILE AUTOMOTEUR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **04.11.2022 DE 102022211684**

(43) Veröffentlichungstag der Anmeldung:
**08.05.2024 Patentblatt 2024/19**

(73) Patentinhaber: **BSH Hausgeräte GmbH**
**81739 München (DE)**

(72) Erfinder:
• **Schnitzer, Frank**
**97616 Bad Neustadt (DE)**
• **Daniel, Kristina**
**97616 Bad Neustadt (DE)**
• **Hassfurter, Stefan**
**96126 Maroldsweisach (DE)**

(56) Entgegenhaltungen:
WO-A1-2022/092571    CN-A- 106 974 593
CN-A- 111 513 626    CN-B- 101 923 351

**Beschreibung**

Die Erfindung betrifft ein Verfahren zum Betrieb eines mobilen, selbstfahrenden Geräts, insbesondere Bodenreinigungsgeräts, wie ein Saug- und/oder Kehrroboter, das unter anderem vorgesehen ist für eine Reinigung eines Umgebungsbereichs von Hindernissen, sowie ein mobiles, selbstfahrendes Gerät, das nach einem derartigen Verfahren betrieben wird.

Mobile, selbstfahrende Geräte wie beispielsweise Saugroboter haben die Aufgabe, autonom möglichst eine gesamte Bodenfläche zu reinigen. Insbesondere sollen Saugroboter ihren Nutzern die Aufgabe abnehmen, den Boden regelmäßig von Staub und Schmutz zu befreien. Hierbei sollen auch wandnahe Bereiche sowie Bereiche um kleinere Hindernisse herum, wie etwa Stuhl- und Tischbeine, möglichst vollständig und hindernisnah gereinigt werden.

Häufig weisen Saugroboter zur Reinigung eine Seitenbürste auf. Diese soll dem Saugroboter ermöglichen, bis an Wände und in Ecken zu reinigen, da ein Saugmund des Roboters meist nicht bis an einen Rand des Robotergehäuses reicht. Vor allem bei runden Saugrobotern wird die Seitenbürste genutzt, um den verhältnismäßig kleinen Saugmund zu kompensieren. Für eine Reinigung entlang gerader Wandabschnitte ist eine Seitenbürste zur Reinigung gut geeignet. Bei dem Umfahren kleinerer Hindernisse oder Objekte können die Seitenbürsten aufgrund ihrer Positionierung jedoch nachteilig einen ungereinigten Bereich beziehungsweise Rand übriglassen.

Teilweise weisen Saugroboter einen Grundkörper auf, der eine D-Form umfasst. D-förmige Roboter, die zusätzlich mit einer Seitenbürste ausgestattet sind, können im Allgemeinen sehr gut entlang von Wänden und in Ecken reinigen. Bei D-förmigen Robotern kann die Seitenbürste basierend auf den vorderen Ecken in der Kontur des Roboters weiter an den Rand gesetzt werden, wodurch mit Vorteil die Reinigung von geraden Wandabschnitten verbessert werden kann. Beim Umrunden von kleineren Hindernissen zeigen sich dadurch jedoch größere ungereinigte Bereiche als bei runden Robotern.

Für eine verbesserte Kanten- und Eckreinigung ist es bekannt, Saugroboter mit einem zusätzlichen, separaten Saugkanal auszustatten. Während durch die mittels Ventil umschaltbare Anbindung an das Gebläse eine hohe Saugleistung bis in eine Raumecke gebracht werden kann, werden bei der Umkreisung eines kleineren Hindernisses nicht gereinigte Bereiche dadurch kaum reduziert.

Die Druckschriften EP 1 935 308 B1 und DE 10 2007 060 750 A1 beschreiben ausschwenkbare Bürsten, die für die Randreinigung entlang von Wänden und in Ecken vorgesehen sind, und auch eine hindernisnahe Reinigung bei entsprechendem Fahrmanöver ermöglichen können. Die Gestaltung einer ausschwenk- oder ausklappbaren Einheit bringt jedoch eine erhöhte mechanische Komplexität mit sich. Zudem können die notwendigen, nicht weniger komplexen Fahrmanöver die Gesamtreinigungsdauer deutlich erhöhen.

Die Druckschriften WO 2018 196 203 A1 und WO 2018 196 204 A1 beschreiben spezielle Reinigungsbaugruppen für Stuhlbeine. Diese umschließen das Bein und reinigen es rundum und annähernd randlos. Dieses Konzept lässt sich auch auf andere kleine Objekte anwenden, jedoch ist die Umsetzung mit einer erhöhten mechanischen Komplexität verbunden und nur für Objekte mit einem speziellen Durchmesser beziehungsweise einer gewissen Größe und Form geeignet.

Die Druckschriften WO 2022/092571 A1, CN 111 513 626 A, CN 106 974 593 A und CN 101 923 351 B beschreiben Fahrverhalten von Reinigungsrobotern an Hindernissen, die zu einer verbesserten Bodenreinigung an diesen Hindernissen führen.

Aufgabe der Erfindung ist es, ein Verfahren zum Betrieb eines mobilen, selbstfahrenden Geräts bereitzustellen, bei dem mit geradlinigen Fahrmanövern Umgebungsbereiche um insbesondere kleine Hindernisse und/oder Objekte möglichst randlos gereinigt werden können.

Diese Aufgabe wird durch ein Verfahren zum Betrieb eines mobilen, selbstfahrenden Geräts mit den Merkmalen des Anspruchs 1 sowie durch ein mobiles, selbstfahrendes Gerät mit den Merkmalen des Anspruchs 7 gelöst. Vorteilhafte Ausgestaltungen und Weiterbildungen sind Gegenstand der Unteransprüche.

Erfindungsgemäß umfasst ein Verfahren zum Betrieb eines mobilen, selbstfahrenden Geräts, insbesondere Bodenreinigungsgeräts wie ein Saug- und/oder Kehr- und/oder Wischroboter, folgende Verfahrensschritte:

- Detektieren zumindest eines Hindernisses in einem Bodenbearbeitungsbereich,
- Reinigen eines Umgebungsbereichs des Hindernisses durch mindestens zwei geradlinige Fahrmanövern am Hindernis aus unterschiedlichen Richtungen,
- wobei die Anzahl und Richtung der geradlinigen Fahrmanöver auf einer Größe und/ oder Form des Hindernisses basieren, und
- wobei eine Planung der Fahrmanöver bestimmt wird mittels eines eine Kontur des Hindernisses einhüllenden Außenkreises und eines an der Kontur des Hindernisses innen anliegenden Innenkreises, dadurch gekennzeichnet, dass die geradlinigen Fahrmanöver durchgeführt werden, falls ein Radius des Außenkreises einen vordefinierten Schwellwert nicht übersteigt.

Erfindungsgemäß wird also ein Verfahren zur Reduzierung nicht erreichbarer Bereiche um insbesondere kleine Hindernisse herum bereitgestellt, bei dem eine Optimierung der Fahrstrategie des Geräts die Grundlage bildet. Durch geeignete Planung der Fahrwege des Geräts kann dabei mit Vorteil auf komplexe mechanische Baugruppen verzichtet werden. Das Verfahren kann vorteilhafterweise unabhängig von Form und Ausrichtung der Hindernisse beziehungsweise Objekte durchgeführt werden.

Eine randlose Reinigung an Hindernissen erfolgt erfindungsgemäß durch geradlinige Fahrmanöver an dem Hindernis entlang beziehungsweise vorbei. Wie oft das Gerät dabei aus unterschiedlichen Richtungen kommend an dem Hindernis entlangfährt, wird unter anderem aus der Größe und Form des Hindernisses bestimmt.

Das Gerät, das für dieses Betriebsverfahren vorgesehen ist, hat vorzugsweise ein Reinigungselement das seitlich über seine Kontur heraussteht. Dies können zum Beispiel eine rotierende Seitenbürste, feststehende Borstenleisten oder ein Reinigungstuch sein. Das Gerätegehäuse kann beispielsweise D-förmig oder rund sein. Mit seinen Antrieben und seiner Steuereinheit ist das Gerät bevorzugt in der Lage, auf dem Boden gerade Bahnen in beliebigen Richtungen zu fahren.

Unter einem mobilen, selbstfahrenden Gerät ist insbesondere ein Bodenreinigungsgerät, zu verstehen, welches beispielsweise im Haushaltsbereich Bodenflächen autonom bearbeitet. Hierunter zählen unter anderem Saug- und/oder Kehr- und/oder Wischroboter wie beispielsweise Staubsaugerroboter. Diese Geräte arbeiten im Betrieb (Reinigungsbetrieb) bevorzugt ohne oder mit möglichst wenig Nutzereingriff. Beispielsweise fährt das Gerät selbsttätig in einen vorgegebenen Raum, um entsprechend einer vorgegebenen und einprogrammierten Verfahrensstrategie den Boden ab zu reinigen.

Um hierbei jegliche individuellen Umgebungsbesonderheiten beachten zu können, findet bevorzugt eine Explorationsfahrt mit dem mobilen, selbstfahrenden Gerät statt. Unter einer Explorationsfahrt ist insbesondere eine Erkundungsfahrt zu verstehen, die dazu geeignet ist, eine zu bearbeitende Bodenfläche nach Hindernissen, Raumaufteilung und ähnlichem zu erkunden. Ziel einer Explorationsfahrt ist es insbesondere, Gegebenheiten des zu bearbeitenden Bodenbearbeitungsbereichs einschätzen und/oder darstellen zu können.

Nach der Explorationsfahrt kennt das mobile, selbstfahrende Gerät seine Umgebung und kann diese in Form einer Umgebungskarte an den Nutzer weitergeben, zum Beispiel in einer App (Reinigungs-App) an einem Mobilgerät. In der Umgebungskarte kann dem Nutzer die Möglichkeit gegeben werden, mit dem mobilen, selbstfahrenden Gerät zu interagieren. Der Nutzer kann mit Vorteil Informationen in der Umgebungskarte einsehen und bei Bedarf ändern und/oder anpassen.

Unter einer Umgebungskarte ist insbesondere jegliche Karte zu verstehen, die geeignet ist, die Umgebung des Bodenbearbeitungsbereichs mit all seinen Hindernissen und Gegenständen darzustellen. Beispielsweise zeigt die Umgebungskarte den Bodenbearbeitungsbereich mit den darin enthaltenen Möbeln und Wänden skizzenartig an.

Die Umgebungskarte mit den Hindernissen wird vorzugsweise in der App an einem tragbaren Zusatzgerät dargestellt. Dies dient insbesondere der Visualisierung zu einer möglichen Interaktion für den Nutzer. Unter einem Zusatzgerät ist vorliegend insbesondere jegliches Gerät zu verstehen, das für einen Benutzer tragbar ist, das außerhalb des mobilen, selbstfahrenden Geräts angeordnet, insbesondere extern und/oder differenziert vom mobilen, selbstfahrenden Gerät ist, und zu einer Anzeige, Bereitstellung, Übermittlung und/oder Übertragung von Daten geeignet ist, wie beispielsweise ein Handy, ein Smartphone, ein Tablet und/oder ein Computer beziehungsweise Laptop.

Auf dem tragbaren Zusatzgerät ist die App, insbesondere eine Reinigungs-App, installiert, die zur Kommunikation des mobilen, selbstfahrenden Geräts mit dem Zusatzgerät dient und insbesondere eine Visualisierung des Bodenbearbeitungsbereichs, also des zu reinigenden Wohnraums oder der zu reinigenden Wohnung beziehungsweise des Wohnbereichs ermöglicht. Die App zeigt dem Nutzer dabei vorzugsweise den zu reinigenden Bereich als Umgebungskarte an.

Unter Verfahrensschritte sind insbesondere hintereinander durchführbare Schritte zu verstehen, die das Fahrverhalten des Geräts beeinflussen. Dabei können die Schritte direkt hintereinander durchgeführt werden oder Zwischenschritte beinhalten.

Unter Hindernisse sind insbesondere jegliche im Bodenbearbeitungsbereich sich aufhaltende Objekte wie beispielsweise Möbel, Geräte, Kleidung, Spielsachen, Tierbedarf, und ähnliches zu verstehen. Die Hindernisse werden dabei von dem Gerät beispielsweise mittels zumindest eines Sensors, vorzugsweise eines Lidar-Sensors und/oder eines Auffahrsensors, beispielsweise eines Bumpers, detektiert.

Unter einem Umgebungsbereich eines Hindernisses ist insbesondere der Bereich zu verstehen, der das Hindernis umschließt beziehungsweise direkt umgibt, und insbesondere daran anschließt. Der Umgebungsbereich erstreckt sich dabei insbesondere vollständig um das Hindernis herum, beispielsweise in einem 360° Umkreis.

Unter einem geradlinigen Fahrmanöver ist insbesondere ein kurvenfreies Fahrverhalten des Geräts zu verstehen, das sich insbesondere entlang einer geraden Bahn bewegt. Drehungen, Kurvenfahrten, Rückwärtsfahrten, oder Fahren auf einer Kreisbahn sind dabei im Wesentlichen nicht inbegriffen.

Unter unterschiedlichen Richtungen sind insbesondere Fahrten des Geräts am Hindernis entlang aus unterschiedlichen Raum- beziehungsweise Bodenbereichsrichtungen zu verstehen. Die Fahrten des Geräts verlaufen vorzugsweise nicht parallel zueinander, sondern weisen zumindest in deren Verlängerung eine Schnittstelle auf. Ebenso entgegen gerichtete Fahrten des Geräts sind als Fahrten aus unterschiedlichen Richtungen zu verstehen.

Unter einer Größe des Hindernisses ist insbesondere dessen Größe im Querschnitt zu verstehen, also im Schnitt durch das Hindernis in einer zum Boden parallel verlaufenden Ebene. Eine Höhe des Hindernisses findet dabei insbesondere keine Beachtung. Unter einer Form des Hindernisses ist insbesondere dessen Kontur in Ausdehnungsebene parallel zum Boden zu verstehen. Zum Bestimmen der Anzahl der benötigten Fahrmanöver werden durch den Sensor des Geräts die Größe und Form des zu umfahrenden Hindernisses detektiert. Abhängig von den detektierten Maßen wird anschließend von dem Gerät die minimale Anzahl der geradlinigen Fahrmanöver berechnet.

Bei einer vorteilhaften Ausführungsform basiert die Anzahl der geradlinigen Fahrmanöver weiter auf einer Reichweite von Reinigungselementen des Geräts und/oder auf einem vorbestimmten Mindestabstand zwischen Gerät und Hindernis. Die notwendige Anzahl der Vorbeifahrten wird also aus der Reichweite des Reinigungselements, beispielsweise der Seitenbürste, einem vordefinierten Mindestabstand zwischen Gerät und Hindernis während der Vorbeifahrt sowie Form und Größe des Hindernisses bestimmt. Die Reinigungsfahrt um das Hindernis herum lässt sich dadurch vorab gezielt planen. Die Geometrie des Geräts wird bei der Planung mitberücksichtigt, und ist entsprechend bekannt. Das Hindernis wird während der Explorationsfahrt oder während der Reinigungsfahrt durch passende Sensorik wie beispielsweise einen Lidar-Sensor, einer Kamera und/oder einer Distanzsensorik erkannt und detektiert beziehungsweise gescannt.

Erfindungsgemäß wird eine Planung der Fahrmanöver bestimmt mittels eines die Kontur des Hindernisses einhüllenden Außenkreises und eines an der Kontur des Hindernisses innen anliegenden Innenkreises. Für die Planung der Vorbeifahrten wird in einem ersten Schritt der kleinste die Kontur des Hindernisses an mindestens zwei äußeren Eckpunkten berührender, einschließender Außenkreis beziehungsweise Umkreis und ein im Zentrum des Außenkreises konzentrisch angeordneter, an der innersten Kante anliegender Innenkreis beziehungsweise Inkreis bestimmt. Abhängig von den ermittelten Kreisen wird anschließend die Anzahl der geradlinigen Fahrmanöver und die Fahrplanung bestimmt.

Erfindungsgemäß werden die geradlinigen Fahrmanöver durchgeführt, falls ein Radius des Außenkreises einen vordefinierten Schwellwert nicht übersteigt. Insbesondere werden die Fahrmanöver lediglich bei kleinen Hindernissen durchgeführt, da bei großen Hindernissen eine randlose Reinigung ohne spezielle Fahrmanöver möglich ist. Ob ein Hindernis als klein einzustufen ist, kann über eine Kontrolle des Außenkreises erfolgen. Überschreitet dessen Radius $r_A$ den Schwellwert $r_G$, so kann davon ausgegangen werden, dass das Gerät mit seinem überstehenden Reinigungselement auch bei einer normalen Umrundung des Hindernisses mittels Kantenverfolgung entlang der Kontur eine randlose Reinigung erzielen kann. Hindernisse, deren Außenkreisradius $r_A$ kleiner als der Schwellwert $r_G$ ist, können nicht mittels Kantenverfolgungsmanöver randlos gereinigt werden und werden daher mit den erfindungsmäßigen geradlinigen Fahrmanövern umfahren.

Vergleicht man die Differenz der Radien des Außenkreises und des Innenkreises ($r_A - r_I$) mit der effektiven Reichweite des Reinigungselements (Reichweite $a_R$ - Mindest- oder Sicherheitsabstand $a_S$), so ergibt sich eine Aussage darüber, ob es möglich ist, am Hindernis aus einer beliebigen Richtung mit dem Mindestabstand vorbeizufahren und es dabei randlos zu reinigen. Je ähnlicher die Kontur des Hindernisses dabei einem Kreis ist, desto geringer ist die Differenz der Kreisradien ($r_A - r_I$) und desto einfacher ist das Erreichen aller Hinderniskanten bei der Reinigung während der Vorbeifahrt. Geometrisch betrachtet wird eine Linie des Mindestabstandes an den Außenkreis angelegt, um zu prüfen, ob eine dazu parallele Linie mit einem Abstand entsprechend der Reichweite des Reinigungselements den Innenkreis schneidet.

Bei einer weiteren vorteilhaften Ausführungsform wird ein Überlappungskreissegment basierend auf einer Überschneidung der Reichweite von Reinigungselementen mit dem Innenkreis bestimmt.

Dabei gilt:

$(a_R - a_S) - (r_A - r_I) > h_{min}$ : Hindernis kann durch beliebige Vorbeifahrten randlos gereinigt werden;

$(a_R - a_S) - (r_A - r_I) \leq h_{min}$ : Hindernis kann nicht durch beliebige Vorbeifahrten randlos gereinigt werden;

wobei $h_{min}$ eine minimale Höhe des Überlappungskreissegments zwischen dem Innenkreis und dem vom Reinigungselement überstrichenen Bereich festlegt. Die Festlegung der Mindesthöhe des Überlappungskreissegments $h_{min}$ verhindert, dass zu viele Fahrmanöver um das Hindernis durchgeführt werden, und wird bestimmt aus der generell maximal erlaubten Anzahl an Fahrmanövern und dem aktuellen Innenkreisradius.

Bei einer weiteren vorteilhaften Ausführungsform wird basierend auf dem Überlappungssegment ein Mittelpunktswinkel bestimmt, wobei bevorzugt mit dem Mittelpunktswinkel die Anzahl der Fahrmanöver bestimmt wird. Insbesondere gilt für $h_{min}$ folgende Formel:

$$h_{min} = r_I * (1 - \cos(\alpha_{min} / 2))$$

mit minimalem Mittelpunktswinkel $\alpha_{min}$ des Kreissegmentes:

$$\alpha_{min} = (2 * \pi) / N_{max},$$

wobei $N_{max}$ die maximale Anzahl der erlaubten Vorbeifahrten ist. Ist sichergestellt, dass es ein ausreichendes Überlappungssegment zwischen der Reichweite des Reinigungselements und dem Innenkreis gibt, so kann berechnet werden, wie viele geradlinige Fahrmanöver am Hindernis notwendig sind, um eine randlose Reinigung zu gewährleisten. Dazu wird in einem ersten Schritt die tatsächliche Höhe h des Überlappungskreissegments von Innenkreis und Reichweitenlinie und anschließend der sich damit ergebende Mittelpunktswinkel $\alpha$ berechnet:

$$h = (a_R - a_S) - (r_A - r_I);$$

$$\alpha = 2 * arcos (1 - (h / r_I)).$$

Mit dem Mittelpunktswinkel $\alpha$ kann die Anzahl N der Fahrmanöver bestimmt werden:

$$N = 360° / \alpha.$$

N wird auf die nächste ganzzahlige Zahl aufgerundet (d. h. die kleinste ganze Zahl, die größer oder gleich ist). Ein Differenzwinkel $\varphi_{diff}$ zwischen benachbarten Fahrmanöver beträgt dabei:

$$\varphi_{diff} = 360° / N.$$

Dies bedeutet unter anderem, dass bei einem Mittelpunktswinkel $\alpha$ größer gleich 180° zwei Fahrmanöver durchgeführt werden, insbesondere in parallelen, entgegen gerichteten Bahnen mit $\varphi_{diff} = 180°$, bei einem Mittelpunktswinkel zwischen einschließlich 120° und 180° drei Fahrmanöver durchgeführt werden (mit $\varphi_{diff} = 120°$), und/oder bei einem Mittelpunktswinkel zwischen einschließlich 90° und 120° vier Fahrmanöver durchgeführt werden (mit $\varphi_{diff} = 90°$). Der gewählte Anfangswinkel ist hierbei beliebig, da das Hindernis aus allen Richtungen gleich gereinigt werden kann. Vorzugsweise wird der Anfangswinkel jedoch bei der Reinigungsplanung für den Umgebungsbereich des Hindernisses berücksichtigt.

Ist kein ausreichendes Überlappungskreissegment zwischen Reinigungselement und Innenkreis gegeben, das bedeutet $(a_R - a_S) - (r_A - r_I) \leq h_{min}$, so ist es nicht möglich, das Hindernis mit dem vorhandenen Reinigungselement und mit geradlinigen Fahrmanövern randlos zu reinigen. Hier sind beispielsweise spezielle Bewegungsmanöver des Geräts notwendig, um zum Beispiel in konkave Ausformungen der Kontur des Hindernisses einzufahren beziehungsweise das Reinigungselement gezielt dort zu positionieren.

Bei einer weiteren vorteilhaften Ausführungsform wird ermittelt, ob die Kontur des Hindernisses eine im Wesentlichen längliche Form aufweist. Dazu werden insbesondere Hauptachsen aus den Messwerten für das Hindernis bestimmt. Die erste Hauptachse führt entlang der längsten Ausdehnung. Die zweite Hauptachse steht senkrecht hierzu. Ist die Ausdehnung der Hinderniskontur in Richtung der zweiten Hauptachse ungefähr gleich dem Durchmesser des Innenkreises, so handelt es sich um ein langgezogenes, schmales Hindernis. Für solche Hindernisse ist es vorteilhaft, auf beiden Seiten entlang der ersten Hauptachse vorbeizufahren, um entlang der langen Seite die Kanten zu reinigen. Ist der Innenradius $r_I$ größer als die Reinigungsreichweite des Geräts $(a_R - a_S)$, so sind zusätzliche Fahrmanöver senkrecht zur ersten Hauptachse an den Enden der Kontur vorteilhaft.

Weiter betrifft die Erfindung ein mobiles, selbstfahrendes Gerät, das wie oben beschrieben betrieben wird, und eine Recheneinheit umfasst, die dazu ausgebildet ist, die Anzahl der geradlinigen Fahrmanöver basierend auf einer Größe und/oder Form des Hindernisses zu berechnen.

Jegliche Merkmale, Ausgestaltungen, Ausführungsformen und Vorteile das Verfahren betreffend finden auch in Zusammenhang mit dem erfindungsgemäßen Gerät Anwendung, und umgekehrt.

Die Erfindung wird anhand der nachfolgenden, lediglich Beispiele darstellenden Ausführungen der Erfindung näher erläutert. Es zeigen:

Figur 1: eine schematische Aufsicht auf ein Ausführungsbeispiel eines mobilen, selbstfahrenden Geräts nach dem Stand der Technik bei der Stuhlbeinreinigung,

Figur 2A: eine schematische Aufsicht auf ein Ausführungsbeispiel eines erfindungsgemäßen mobilen, selbstfahrenden Geräts bei der Stuhlbeinreinigung,

Figur 2B: eine schematische Unteransicht eines Ausführungsbeispiels eines erfindungsgemäßen mobilen, selbstfahrenden Geräts,

Figuren 3A-3C:   jeweils schematische Aufsichten auf Hindernisse zur Definition des Außenkreises und des Innenkreises,

Figuren 4A-5B   jeweils schematische Aufsichten zur Definition des Außenkreises, des Innenkreises, der Reichweite, des Mindestabstands, des Mittelpunktswinkels und der Höhe des Überlappungskreissegments, und

Figur 6   ein Ablaufdiagramm betreffend ein Ausführungsbeispiel eines erfindungsgemäßen Betriebsverfahrens.

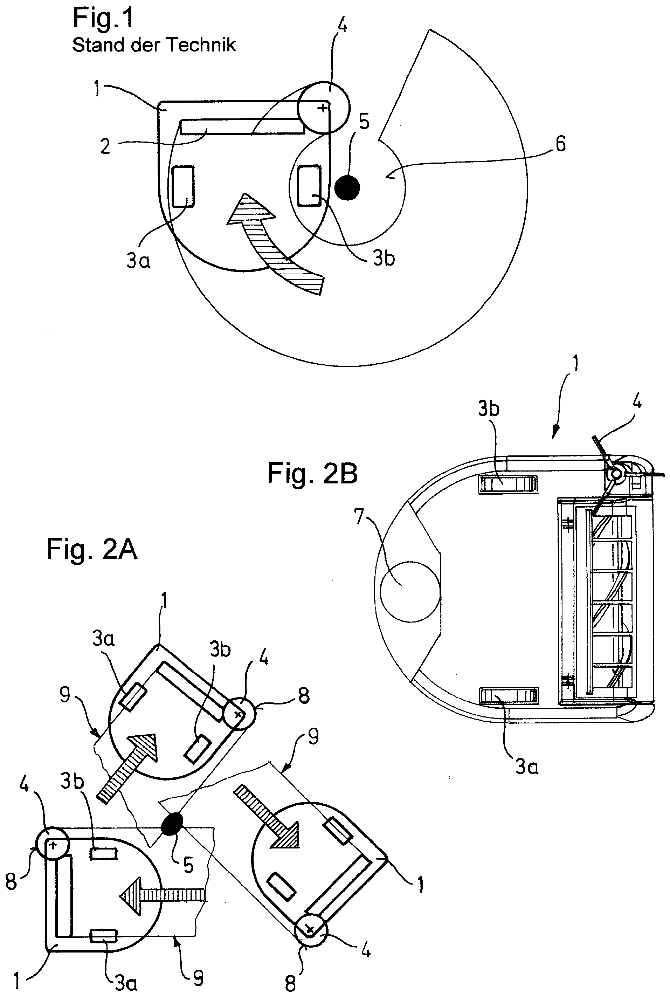

In Figur 1 ist ein mobiles, selbstfahrendes Gerät, insbesondere ein Saugroboter 1, dargestellt, das einen Saugmund 2, Antriebsräder 3a, 3b und ein Reinigungselement 4, insbesondere eine Seitenbürste, umfasst. Die Seitenbürste ist an einem vorderen rechten Eck eines Gerätegehäuses des Saugroboters 1 angeordnet, und ermöglicht diesem eine verbesserte Kanten- und Eckreinigung.

Um kleine Hindernisse 5, wie beispielsweise Stuhl- oder Tischbeine zu reinigen, ist es herkömmlicherweise vorgesehen, dass der Saugroboter 1 das zu reinigende Bein mit der Seitenbürste am Bein umrundet. Aufgrund der Größe des Saugmunds, der Positionierung der Seitenbürste und der Form des Gerätegehäuses besteht jedoch die Gefahr, dass ein Umgebungsbereich 6 des Hindernisses 5 beziehungsweise ein kreisrunder Rand um das Hindernis 5 herum ungereinigt bleibt.

Um eine randlose Reinigung um kleinere Hindernisse herum zu ermöglichen, finden erfindungsgemäß geradlinige Fahrmanöver 9 aus unterschiedlichen Richtungen Anwendung, wie es beispielsweise in Figur 2A dargestellt ist. Die Anzahl der dazu notwendigen geradlinigen Vorbeifahrten lässt sich unter anderem aus Größe und Form des Hindernisses 5 ableiten. Eine verbesserte Randreinigung wird erfindungsgemäß durch eine Optimierung der Fahrstrategie des Saugroboters 1 realisiert.

Der Saugroboter weist ein Reinigungselement 4, beispielsweise eine rotierende Seitenbürste, eine feststehende Borstenleiste oder ein Reinigungstuch an einer seiner vorderen Ecke auf, das über seine Kontur heraussteht, wie es in den Figuren 2A, 2B gezeigt ist. Vorzugsweise weist die Gehäuseform eine D-Form auf. Alternativ kann der Saugroboter eine runde Form aufweisen. Mit seinen Antriebsrädern 3a, 3b, einer Lenkrolle 7 (caster wheel) und der Steuereinrichtung ist der Saugroboter in der Lage, auf dem zu reinigenden Boden gerade Bahnen in beliebigen Richtungen zu fahren. Um Hindernisse im Bodenbearbeitungsbereich zu detektieren, scannen und deren Form und Größe zu bestimmen, findet ein Lidar-Sensor Verwendung (nicht dargestellt), der auf einem hinteren Bereich des Gerätegehäuses angeordnet ist und diesen überragt. Basierend auf der abgeleiteten Form und Größe des detektierten Hindernisses 5 sowie basierend auf einer Reichweite 8 des Reinigungselements 4 und einem gewünschten Mindestabstand zwischen Saugroboter und Hindernis 5 während der Vorbeifahrt lässt sich die notwendige Anzahl der geradlinigen Fahrmanöver 9, insbesondere Vorbeifahrten, bestimmen. Es lässt sich insbesondere die Reinigung um das Hindernis 5 herum vorab gezielt planen.

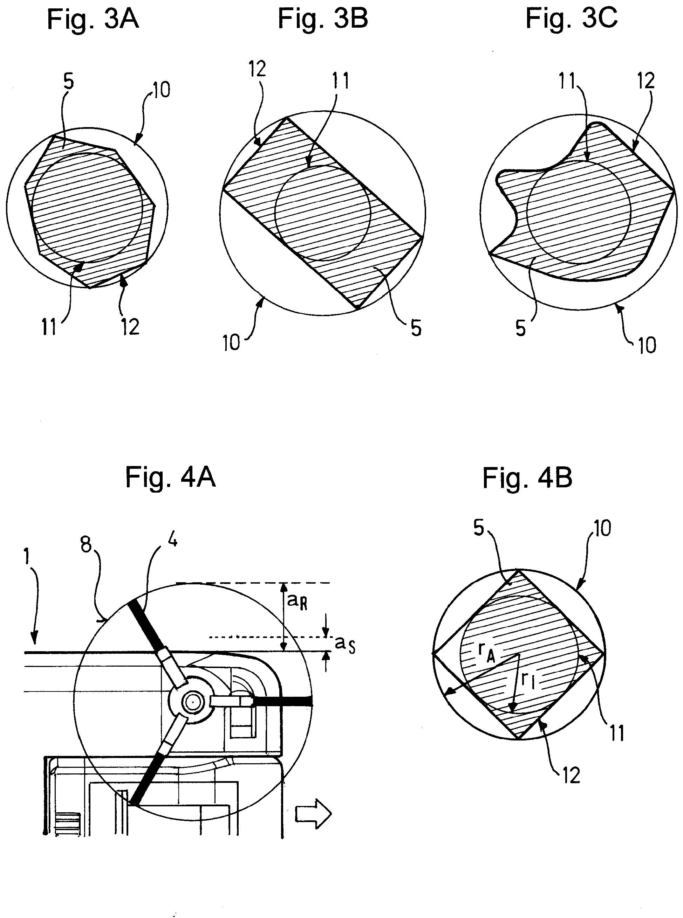

Für die Planung der geradlinigen Fahrmanöver wird in einem ersten Schritt der kleinste die Kontur des Hindernisses 5 an mindestens zwei äußeren Eckpunkten berührender Außenkreis 10 und ein im Zentrum des Außenkreises 10 konzentrisch angeordneter, an der innersten Kante anliegender Innenkreis 11 bestimmt. In den Figuren 3A, 3B, 3C sind hierzu Beispiele unterschiedlicher Hindernisse 5 mit verschiedenen Konturen 12 dargestellt. Für die unterschiedlichen Hindernisse 5 sind insbesondere jeweils der außen anliegende oder einhüllende Außenkreis 10 und der innen anliegende Innenkreis 11 bestimmt.

Das erfindungsgemäße geradlinige Fahrmanöver findet insbesondere lediglich bei als klein eingestuften Hindernissen 5 Anwendung. Ob ein detektiertes Hindernis 5 als klein eingestuft wird, erfolgt über eine Kontrolle des Außenkreises 10. Überschreitet der Radius $r_A$ des Außenkreises 10 einen vordefinierten Schwellwert $r_G$, so erreicht der Saugroboter 1 mit seinem überstehenden Reinigungselement 4 auch bei einer normalen Umrundung des Hindernisses 5 mittels Kantenverfolgung entlang der Kontur 12 eine randlose Reinigung. Das erfindungsgemäße geradlinige Fahrmanöver ist in diesem Fall nicht notwendig. Hindernisse, deren Radius $r_A$ des Außenkreises 10 den vordefinierten Schwellwert $r_G$ unterschreiten, können nicht mittels Kantenverfolgungsmanöver randlos gereinigt werden. Für eine randlose Reinigung findet in diesem Fall das erfindungsgemäße geradlinige Fahrmanöver zur Umrundung des Hindernisses 5 Anwendung.

Um sicherzustellen, dass eine randlose Reinigung und ein Vorbeifahren am Hindernis 5 aus beliebiger Richtung mit dem Mindestabstand möglich sind, wird die Differenz des Außenkreisradius $r_A$ und des Innenkreisradius $r_I$ ($r_A - r_I$) mit der effektiven Reichweite des Reinigungselements (Reichweite $a_R$ - Mindestabstand $a_S$) verglichen. Je ähnlicher die Kontur 12 des Hindernisses 5 dabei einem Kreis ist, desto geringer ist die Differenz der Kreisradien ($r_A - r_I$) und desto einfacher ist das Erreichen aller Hinderniskanten während der Vorbeifahrt. Die Reichweite des Reinigungselements und der Mindestabstand von Saugroboter zu Hindernis sowie die Kreisradien sind in den Figuren 4A und 4B verdeutlicht.

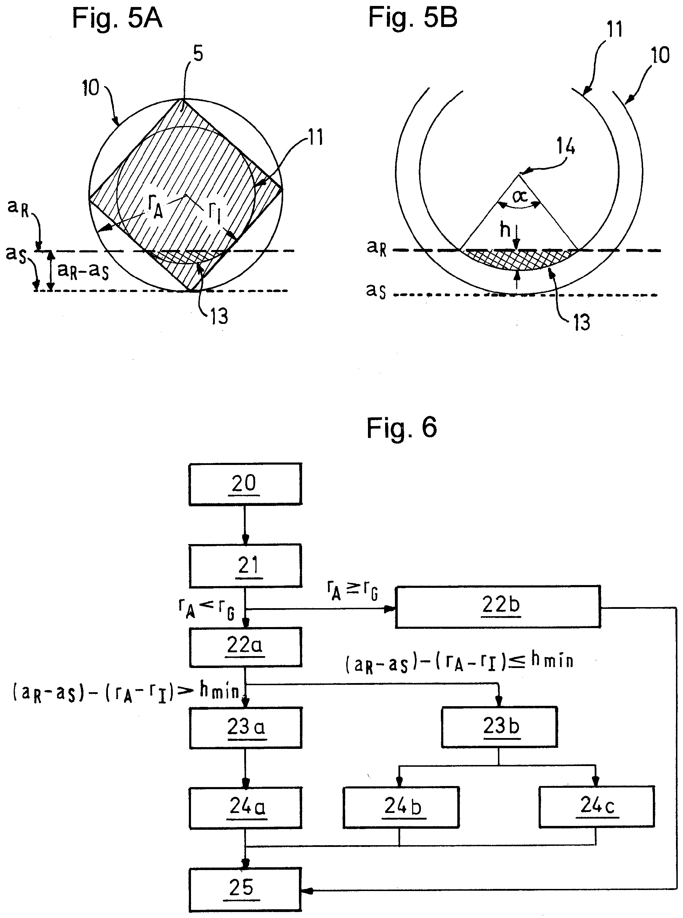

In den Figuren 5A, 5B ist die Prüfung, ob sich eine Überschneidung beziehungsweise ein Überlappungskreissegment 13 zwischen Reichweite $a_R$ und Innenkreis 11 ergibt, geometrisch dargestellt, womit sich eine Aussage darüber treffen lässt, ob sich das Hindernis 5 durch Vorbeifahrten aus beliebigen Richtungen randlos reinigen lässt. Insbesondere gilt:

$(a_R - a_S) - (r_A - r_I) > h_{min}$ :  Hindernis 5 kann durch beliebige Vorbeifahrten randlos gereinigt werden;
$(a_R - a_S) - (r_A - r_I) \leq h_{min}$ :  Hindernis 5 kann nicht durch beliebige Vorbeifahrten randlos gereinigt werden;

wobei $h_{min}$ eine minimale Höhe des Überlappungskreissegments 13 zwischen dem Innenkreis 11 und dem vom Reinigungselement überstrichenen Bereich festlegt. Die Festlegung der Mindesthöhe des Überlappungskreissegments $h_{min}$ verhindert, dass zu viele Fahrmanöver um das Hindernis 5 durchgeführt werden, und wird bestimmt aus der generell maximal erlaubten Anzahl an Fahrmanövern und dem aktuellen Innenkreisradius $r_I$.

Die Überlappung der Reichweite $a_R$ des Reinigungselements und des Innenkreises 11 führt zu einem Überlappungskreissegment 13, das durch seine Höhe h und den Mittelpunktswinkel $\alpha$ definiert wird (siehe Figur 5B).

Für $h_{min}$ gilt insbesondere:

$$h_{min} = r_I * (1 - \cos(\alpha_{min} / 2))$$

mit minimalem Mittelpunktswinkel $\alpha_{min}$ am Mittelpunkt 14 des Überlappungskreissegments 13:

$$\alpha_{min} = (2 * \pi) / N_{max},$$

wobei $N_{max}$ die maximale Anzahl der erlaubten Vorbeifahrten ist. Ist sichergestellt, dass es ein ausreichendes Überlappungssegment 13 zwischen der Reichweite $a_R$ des Reinigungselements und dem Innenkreis 11 gibt, so kann berechnet werden, wie viele geradlinige Fahrmanöver am Hindernis 5 notwendig sind, um eine randlose Reinigung zu gewährleisten. Dazu wird in einem ersten Schritt die tatsächliche Höhe h des Überlappungskreissegments 13 von Innenkreis 11 und Reichweitenlinie $a_R$ und anschließend der sich damit ergebende Mittelpunktswinkel $\alpha$ berechnet:

$$h = (a_R - a_S) - (r_A - r_I);$$

$$\alpha = 2 * \arccos(1 - (h / r_I)).$$

Mit dem Mittelpunktswinkel $\alpha$ kann die Anzahl N der Fahrmanöver bestimmt werden, indem

$$N = 360° / \alpha$$

auf die nächste ganzzahlige Zahl größer oder gleich N aufgerundet wird. Ein Differenzwinkel $\varphi_{diff}$ zwischen benachbarten Fahrmanöver beträgt dabei:

$$\varphi_{diff} = 360° / N.$$

Ist kein ausreichendes Überlappungskreissegment 13 zwischen Reinigungselement und Innenkreis 11 gegeben, also $(a_R - a_S) - (r_A - r_I) \leq h_{min}$, so ist es nicht möglich, das Hindernis 5 mit dem vorhandenen Reinigungselement und mit geradlinigen Fahrmanövern randlos zu reinigen. Hier sind beispielsweise spezielle Bewegungsmanöver des Geräts notwendig, um zum Beispiel in konkave Ausformungen der Kontur des Hindernisses 5 einzufahren beziehungsweise das Reinigungselement gezielt dort zu positionieren.

In Figur 6 ist ein Ablaufdiagramm eines Betriebsverfahrens einer randlosen Hindernisreinigung gezeigt. Hierbei ist ein vereinfachtes Verfahren dargestellt (links im Diagramm), bei dem beliebig ausgerichtete, gerade Vorbeifahrten durchgeführt werden. Auf den rechts dargestellten Pfaden sind aufwendige Berechnungen notwendig, die detailliert auf die Form und Ausrichtung des Hindernisses ausgerichtet sind.

Im ersten Schritt 20 wird das zu umfahrende Hindernis insbesondere aus mehreren Richtungen mit dem Lidar-Sensor des Saugroboters gescannt beziehungsweise detektiert. Mit den gescannten Werten kann in Schritt 21 der Außenkreis des Hindernisses bestimmt werden.

Unterschreitet der Radius des Außenkreises $r_A$ dabei einen vordefinierten Schwellwert $r_G$ ($r_A < r_G$), werden der Innenkreis und dessen Innenkreisradius $r_I$ bestimmt (Schritt 22a). Ist $(a_R - a_S) - (r_A - r_I) > h_{min}$, wird der Mittelpunktswinkel $\alpha$ des Überlappungskreissegments bestimmt (Schritt 23a). Im Schritt 24a wird anschließend die Anzahl N der geradlinigen Fahrmanöver und der Differenzwinkel bestimmt. Abschließend können der Fahrweg beziehungsweise die Fahrtrajektorien des Saugroboters zur hindernisnahen Reinigung geplant werden (Schritt 25).

Überschreitet nach Schritt 21 der Radius des Außenkreises $r_A$ den vordefinierten Schwellwert $r_G$ ($r_A \geq r_G$), kann das Reinigungselement des Saugroboters bei einer normalen Kantenfolgefahrt entlang der Kontur des Hindernisses eine randlose Reinigung erzielen. Der Fahrweg beziehungsweise die Fahrtrajektorien des Saugroboters zur hindernisnahen Reinigung können ohne weitere Berechnung geplant werden (Schritt 25).

Ist nach Schritt 22a $(a_R - a_S) - (r_A - r_I) \leq h_{min}$, werden die Hauptachsen des Hindernisses bestimmt (Schritt 23b). Entspricht die Ausdehnung entlang einer zweiten Hauptachse etwa $r_I$, wird die Reinigung parallel zu den Hauptachsen durchgeführt (Schritt 24b), und der Fahrweg beziehungsweise die Fahrtrajektorien des Saugroboters entsprechend geplant. Ist die Ausdehnung entlang der zweiten Hauptachse dagegen $\gg r_I$, so ist eine gesonderte Behandlung nötig (Schritt 24c), um den Fahrweg beziehungsweise die Fahrtrajektorien des Saugroboters planen zu können (Schritt 25).

Jegliche Schritte 20-25 werden dabei automatisch vom Gerät nach erfolgter Hindernisdetektion durchgeführt beziehungsweise bestimmt. Ein Nutzereingriff ist mit Vorteil nicht notwendig. Das Gerät bestimmt selbstständig, welche Umgebungsreinigung es aufgrund der bestimmten beziehungsweise detektierten Werte durchführt.

**Patentansprüche**

1. Verfahren zum Betrieb eines mobilen, selbstfahrenden Geräts (1), insbesondere Bodenreinigungsgeräts, wie ein Saug- und/oder Kehr- und/oder Wischroboter, bei dem folgende Verfahrensschritte durchgeführt werden:

   - Detektieren zumindest eines Hindernisses (5) in einem Bodenbearbeitungsbereich,
   - Reinigen eines Umgebungsbereichs des Hindernisses (5) durch mindestens zwei geradlinige Fahrmanövern (9) am Hindernis (5) aus unterschiedlichen Richtungen,
   - wobei die Anzahl (N) und Richtung der geradlinigen Fahrmanöver (9) auf einer Größe und/ oder Form des Hindernisses (5) basieren, und
   - wobei eine Planung der Fahrmanöver bestimmt wird mittels eines eine Kontur des Hindernisses (5) einhüllenden Außenkreises (10) und eines an der Kontur des Hindernisses (5) innen anliegenden Innenkreises (11), **dadurch gekennzeichnet, dass** die geradlinigen Fahrmanöver (9) durchgeführt werden, falls ein Radius ($r_A$) des Außenkreises (10) einen vordefinierten Schwellwert ($r_G$) nicht übersteigt.

2. Verfahren nach Anspruch 1, wobei die Anzahl (N) der geradlinigen Fahrmanöver (9) weiter basiert auf einer Reichweite (8) von Reinigungselementen (4) des Geräts (1) und/oder auf einem vorbestimmten Mindestabstand zwischen Gerät (1) und Hindernis (5).

3. Verfahren nach einem der vorhergehenden Ansprüche, wobei ein Überlappungskreissegment (13) basierend auf einer Überschneidung der Reichweite (8) von Reinigungselementen (4) mit dem Innenkreis (11) bestimmt wird.

4. Verfahren nach Anspruch 3, wobei basierend auf dem Überlappungskreissegment (13) ein Mittelpunktswinkel ($\alpha$) bestimmt wird.

5. Verfahren nach Anspruch 4, wobei mit dem Mittelpunktswinkel ($\alpha$) die Anzahl (N) der Fahrmanöver bestimmt wird.

6. Verfahren nach Anspruch 4 oder 5, wobei bei einem Mittelpunktswinkel ($\alpha$) größer gleich 180° zwei Fahrmanöver durchgeführt werden, bei einem Mittelpunktswinkel ($\alpha$) zwischen einschließlich 120° und 180° drei Fahrmanöver durchgeführt werden, und/oder bei einem Mittelpunktswinkel ($\alpha$) zwischen einschließlich 90° und 120° vier Fahrmanöver durchgeführt werden.

7. Mobiles, selbstfahrendes Gerät (1), das nach einem der vorhergehenden Ansprüche betrieben wird, und eine Recheneinheit umfasst, die dazu ausgebildet ist, die Anzahl (N) der geradlinigen Fahrmanöver (9) basierend auf einer Größe und/ oder Form des Hindernisses (5) zu berechnen.

**Claims**

1. Method for operating a mobile, self-propelled device (1), in particular floor cleaning device, such as a suction and/or sweeping and/or mopping robot, with which the following method steps are carried out:

   - detecting at least one obstacle (5) in a floor processing area,

- cleaning an area surrounding an obstacle (5) by way of at least two straight-line manoeuvres (9) at the obstacle (5) from different directions,
- wherein the number (N) and direction of the straight-line manoeuvres (9) is based on a size and/or shape of the obstacle (5), and
- wherein a plan for the manoeuvre is determined by means of an outer circle (10) which envelopes a contour of the obstacle (5) and by means of an inner circle (11) which borders the inner contour of the obstacle (5), **characterised in that** the straight-line manoeuvres (9) are carried out if a radius ($r_A$) of the outer circle (10) does not exceed a predefined threshold value ($r_G$).

2. Method according to claim 1, wherein the number (N) of the straight-line manoeuvres (9) is further based on a range (8) of cleaning elements (4) of the device (1) and/or on a predetermined minimum distance between the device (1) and obstacle (5).

3. Method according to one of the preceding claims, wherein an overlap circle segment (13) is determined based on an overlap of the range (8) of cleaning elements (4) with the inner circle (11).

4. Method according to claim 3, wherein a centre angle ($\alpha$) is determined based on an overlap circle segment (13).

5. Method according to claim 4, wherein the number (N) of the manoeuvres is determined by the centre angle ($\alpha$).

6. Method according to claim 4 or 5, wherein two manoeuvres are carried out when a centre angle ($\alpha$) is greater than or equal to 180°, three manoeuvres are carried out when a centre angle is between 120° and 180°, inclusive, and/or four manoeuvres are carried out when a centre angle is between 90° and 120°, inclusive.

7. Mobile, self-propelled device (1), which is operated according to one of the preceding claims, and comprises a computing unit which is designed to calculate the number (N) of the straight-line manoeuvres (9) based on a size and/or shape of the obstacle (5).

**Revendications**

1. Procédé d'exploitation d'un appareil mobile automoteur (1), en particulier d'un appareil de nettoyage de sol, tel qu'un robot aspirateur et/ou balayeur et/ou de passage de la serpillière, dans lequel les étapes de procédé suivantes sont effectuées :

   - détection d'au moins un obstacle (5) dans une zone de traitement de sol,
   - nettoyage d'une zone environnante de l'obstacle (5) par au moins deux manœuvres de déplacement rectilignes (9) sur l'obstacle (5) au départ de directions différentes,
   - dans lequel le nombre (N) et la direction des manœuvres de déplacement rectilignes (9) se fondent sur une taille et/ou forme de l'obstacle (5), et
   - dans lequel une planification des manœuvres de déplacement est établie au moyen d'un cercle extérieur (10) enveloppant un contour de l'obstacle (5) et d'un cercle intérieur (11) s'appliquant intérieurement sur le contour de l'obstacle (5), **caractérisé en ce que** les manœuvres de déplacement rectilignes (9) sont effectuées si un rayon ($r_A$) du cercle extérieur (10) n'excède pas une valeur seuil prédéfinie ($r_G$).

2. Procédé selon la revendication 1, dans lequel le nombre (N) de manœuvres de déplacement rectilignes (9) se fonde en outre sur une portée (8) d'éléments de nettoyage (4) de l'appareil (1) et/ou sur une distance minimale préétablie entre l'appareil (1) et l'obstacle (5).

3. Procédé selon l'une des revendications précédentes, dans lequel un segment circulaire de chevauchement (13) est établi sur la base d'une intersection de la portée (8) d'éléments de nettoyage (4) avec le cercle intérieur (11).

4. Procédé selon la revendication 3, dans lequel un angle au centre ($\alpha$) est établi sur la base du segment circulaire de chevauchement (13).

5. Procédé selon la revendication 4, dans lequel le nombre (N) de manœuvres de déplacement est établi avec l'angle au centre ($\alpha$).

6. Procédé selon la revendication 4 ou 5, dans lequel deux manœuvres de déplacement sont effectuées en présence d'un angle au centre ($\alpha$) supérieur ou égal à 180°, trois manœuvres de déplacement sont effectuées en présence d'un angle au centre ($\alpha$) compris entre 120° inclus et 180°, et/ou quatre manœuvres de déplacement sont effectuées en présence d'un angle au centre ($\alpha$) compris entre 90° inclus et 120°.

7. Appareil mobile automoteur (1) exploité selon l'une des revendications précédentes et comprenant une unité de calcul formée pour calculer le nombre (N) de manœuvres de déplacement rectilignes (9) sur la base d'une taille et/ou d'une forme de l'obstacle (5).

## Fig.1
### Stand der Technik

## Fig. 2B

## Fig. 2A

# Fig. 3A

# Fig. 3B

# Fig. 3C

# Fig. 4A

# Fig. 4B

# Fig. 5A

# Fig. 5B

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1935308 B1
- DE 102007060750 A1
- WO 2018196203 A1
- WO 2018196204 A1
- WO 2022092571 A1
- CN 111513626 A
- CN 106974593 A
- CN 101923351 B